# EUROPEAN PATENT SPECIFICATION

(11) **EP 2 576 254 B1**
(45) Date of publication and mention of the grant of the patent: **12.09.2018**
(21) Application number: 11744108.9
(22) Date of filing: 25.05.2011
(51) Int. Cl.: B60H 1/22, F24H 1/10, H05B 3/22, F24H 1/12, H05B 6/42

(54) **ELECTRIC HEATER**
ELEKTRISCHE HEIZUNG
CHAUFFAGE ÉLECTRIQUE

(30) Priority: 28.05.2010 IT BO20100056 U
(43) Date of publication of application: 10.04.2013
(73) Proprietor: AB Trasmissioni S.r.l., 44042 Cento Ferrara (IT)
(72) Inventor: ALBERGHINI, Gloria, I-44042 Renazzo di Cento Ferrara (IT); GOBBATO, Valter, I-44042 Renazzo di Cento Ferrara (IT)
(74) Representative: Gustorf, Gerhard
(86) International application number: PCT/IT2011/000172
(87) International publication number: WO 2011/148404

(56) References cited:
- DE-A1- 3 340 313
- GB-A- 2 324 014
- US-A1- 2002 000 007

## Description

### Technical field of the invention

- The present invention relates to an electric heater for heating and maintaining the temperature and circulation of a fluid.
- More particularly, the present invention relates to a heater of the said type which is designed to heat and maintain at a temperature, which is set but can be regulated, the cooling fluid for internal combustion engines, as well as to obtain and/or permit circulation of the fluid itself, in order to keep the engine hot for the purpose of ignition and its immediate use.

### Backgrounds of the invention

- At present heaters of the said type are known, but they have a series of disadvantages.
- A first disadvantage is caused by the fact that the resistor which is designed to heat the fluid, and is placed directly in contact with the fluid, is damaged because of even a partial lack of the cooling fluid inside the heating chamber of the heater, for example when air bubbles form.
- A second disadvantage is caused by the fact that (mainly calcareous) deposits can form on the resistor, caused by contact with the fluid, and which do not permit correct functioning.
- A third disadvantage is caused by the fact that sometimes the resistor loses its sealing characteristics, with consequent infiltrations of fluid inside it, wherein these infiltrations damage the resistor, and therefore the corresponding heater, causing short circuits and/or other faults.
- A fourth disadvantage is caused by the fact that at times the seat in which the resistor is secured loses the sealing characteristics, with a consequent loss of fluid and possible damage to the corresponding heater.
- A fifth disadvantage is caused by the fact that the said heaters comprise a temperature sensor which is designed to measure the temperature of the fluid, wherein this sensor is arranged inside a receptacle which, as a result of ageing or for other reasons, sometimes loses its sealing characteristics, with consequent infiltrations of fluid inside the receptacle itself, wherein these infiltrations damage the said sensor and therefore the corresponding heater.
- A sixth disadvantage is caused by the fact that at times the seat in which the said sensor is secured or the said receptacle loses its sealing characteristics, with a consequent loss of fluid and possible damage to the corresponding heater.
- A seventh disadvantage is caused by the fact that, for the above-described reasons, these known heaters are subject to faults, and therefore have limited reliability and, for example, with reference to their particular use in the field of emergency generating sets located in cold climates, breakdown of the heater can cause failure to start of the emergency generating set, with consequent serious damage and inconvenience because of the lack of distribution of the current, or serious damage to the endothermic engine if it is started with the engine too cold (i.e. with the cooling fluid too cold), as well as serious damage if the endothermic engine is made to function with the engine too cold (i.e. with the cooling fluid too cold).

### Prior art

An electric heater as set forth in the preamble of claim 1 is known from GB 2 324 014 A. However, the heating elements (resistors) and the temperature sensors are positioned outside of the base body such that they cannot directly measure the temperature of it. Furthermore the control unit is located outside of the heater.

US 2002/0000007 A1 relates to a water heater to be used in spas, pools or the like which is less relevant as also here the various elements are separate parts without being incorporated in a unit.

### Disclosure of the invention

- The object of the invention is to resolve the above-described disadvantages.
- The invention, which is characterised by the claims, resolves the problem of creating an electric heater for heating, maintaining the temperature and permitting the circulation of a fluid, wherein said heater is characterised in by the features of claim 1.

### Brief description of the Drawings

- Further characteristics and advantages of the present invention will become more apparent from the following description of a preferred practical embodiment of it, provided here purely by way of non-limiting example, with reference to the attached figures in which:
   - Figure 1 illustrates the heater which is the subject of the present invention in a closed configuration;
   - Figure 2 illustrates the heater itself in figure 1 with the cover raised;

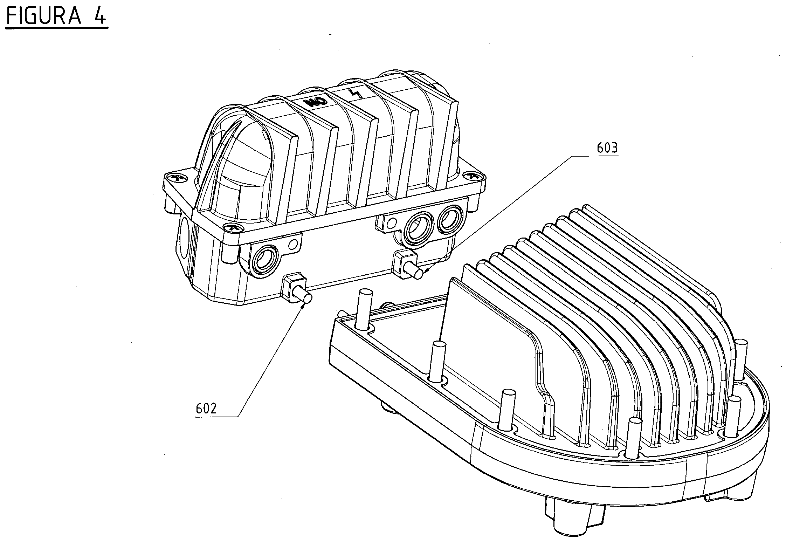

   - Figures 3 and 4 illustrate the heater with the base - body detached from a box-shaped body which is designed to contain the control unit;
   - Figure 5 is a front view of the heater;
   - Figure 6 is a plan view of the heater in figure 5;
   - Figure 7 is a rear view of the heater in figure 5;
   - Figure 7A is a view in cross-section in relation to the line 7A-7A in figure 7;
   - Figure 7B is a view in cross-section in relation to the line 7B-7B in figure 7A;
   - Figure 7C is a view in cross-section in relation to the line 7C-7C in figure 7B.

### Best Mode For Carrying Out The Invention

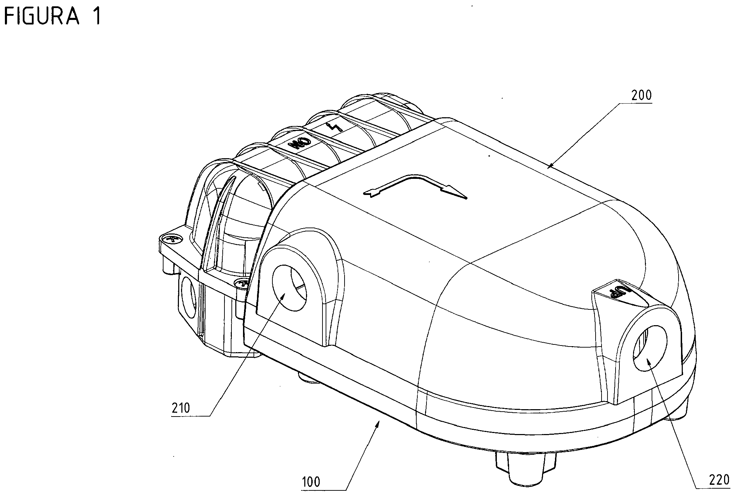

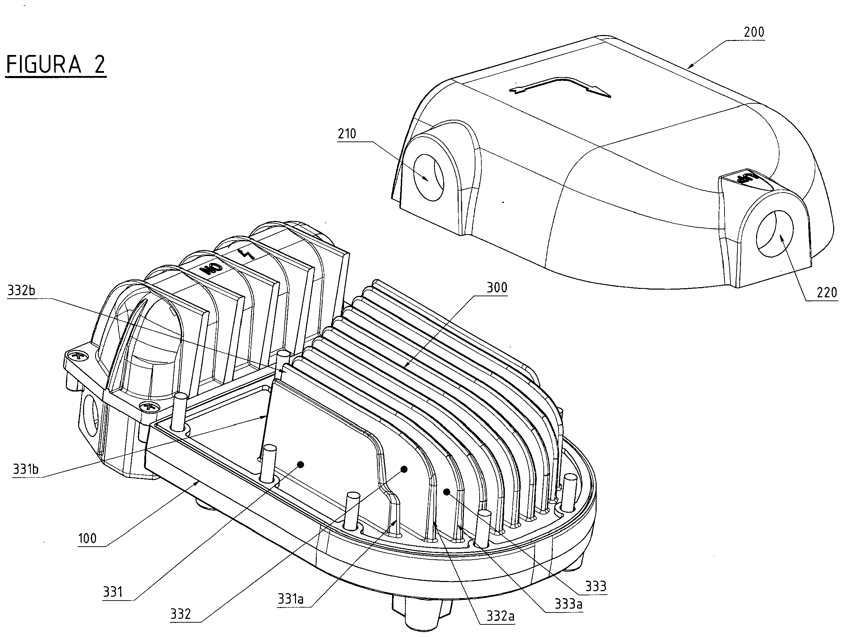

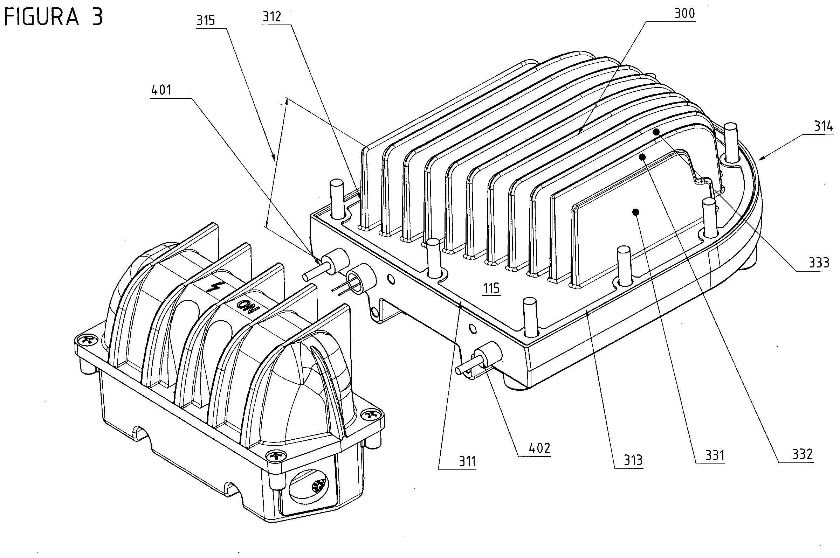

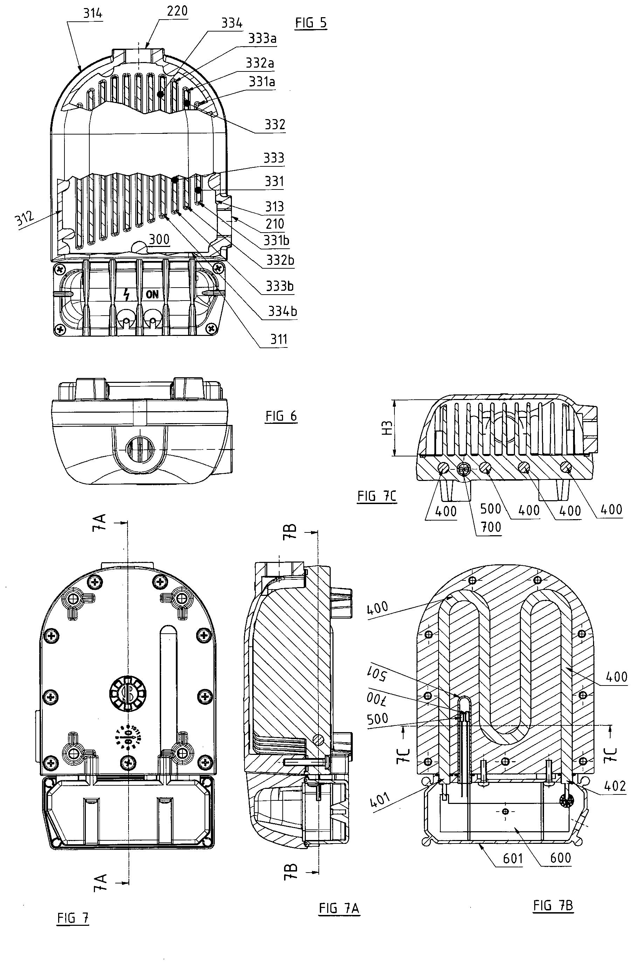

- With reference to figures 1 and 2, the heater substantially comprises a first, base body 100 and a second, cover body 200 with a high edge H3, which are preferably made of a material with a high coefficient of thermal conductivity, for example aluminium, wherein the said first and the said second bodies 100 and 200 are associated with one another by securing means and seals in order to form an inner chamber 300 for heating, and to permit the flowing of a fluid, as will be better understood hereinafter.
- With reference also to figure 7B, the first, base body 100 incorporates in its interior an electric resistor 400, which is embedded / incorporated in the mass of material which forms the said first, base body 100, wherein the said resistor 400 heats the first, base body itself 100 by thermal conductivity, and wherein the said resistor 400 preferably has a configuration in the form of a coil-snake in order to distribute the heat better in the first, base body 100.
- The said first, base body 100 also incorporates the first sensor 500, i.e. the operating sensor, which is designed to measure the temperature of the mass of material of the first, base body 100, and, more particularly, the said incorporation comprises a blind hole 501, which has its access mouth disposed on the lower side 311 of the first, base body 100, wherein the said hole 501 permits insertion of the sensor 500 in its interior.
- The resistor 400 and the sensor 500 are connected to a control unit 600, preferably of the electronic type, which is preferably contained in a third, box-shaped body 601, wherein, on the basis of the signals received from the sensor 500, the said control unit 600 activates - controls (power supplies or does not power supply) the resistor 400, in order to provide for the heating and maintenance at a certain temperature (or between a minimum and maximum temperature) of the mass of material which constitutes the first, base body 100.
- The heater itself also comprises a second sensor 700, i.e. a safety sensor, which is also connected to the control unit 600 or to other similar control devices, wherein the said control unit 600 or the said similar devices control the signals received from the second sensor 700 and interrupt the power supply to the resistor 400 if the base body 100 exceeds a certain temperature limit.
- This first, base body 100 is also provided with a plurality of fins 330, and more particularly with fins 331, 332, 333, etc., described in further detail hereinafter, which are also made of a material with a high coefficient of thermal conductivity, for example aluminium, and extend vertically inside the said inner chamber 300, with their longitudinal base associated with the surface of the inner face 115 of the first, base body 100, such as to obtain the heating of the fins 331, 332, 333, etc. themselves by thermal conduction by means of heating of the first, base body 100.
- With particular reference to the said fins 331, 332, 333, etc., it should be noted that their particular laminar form provides an ample heat-exchange surface, which is far greater than that available according to the known art, wherein the resistor was in direct contact with the fluid to be heated.
- Preferably, the said fins 331, 332, 333, etc. are obtained by means of a single smelting operation together with the first, base body 100.
- The cover 200 comprises a first mouth 210 for intake of the fluid into the inner chamber 300, and a second mouth 220 for discharge of the fluid from the said inner chamber 300.
- When they are associated with one another, the base body 100 and the cover body 200 are designed to form an inner chamber 300 which, briefly, has the shape of a box, wherein (see by way of illustration figure 3 in which the cover 200 is missing, and figure 5) the said inner chamber 300 is delimited by a side_lower wall 311, a side_left vertical wall 312, a side_right vertical wall 313, a side_upper wall 314, and a depth defined by the height H3 (see figure 7C) of the cover 200 itself.
- With particular reference to figure 5, the first, fluid intake mouth 210 is arranged in the lower area of the said chamber 300, and in the vicinity of the right side 313 of the chamber 300 itself; the outlet mouth 220 for the fluid is arranged on the upper side 314 of the chamber 300 itself; and the fins 331, 332, 333, etc. are placed inside the said chamber 300, oriented vertically, and spaced transversely from one another, with their respective upper ends 331a, 332a, 333a, etc. spaced from the side_upper curved wall 314, and their lower ends 331b, 332b, 333b, 334b, etc. spaced from the side_lower wall 311, such that when the fluid enters from the right to the left from the first mouth 210 into the inner chamber 300, as a result of the so-called thermo-siphon effect, or by means of a recirculation pump, not illustrated, the said fluid rises upwards and flows between the fins 331, 332, 333, 334, etc., with consequent heating of the fluid, and is then discharged heated from the second, upper mouth 220.
- In this context, preferably, the fins 331, 332, 333, etc. have their respective lower ends 331b, 332b, 333b arranged spaced from the side - lower wall 311 of the inner chamber 300, and also preferably the said lower ends 331b, 332b, 333b, etc. of each fin 331, 332, 333, etc. are spaced from the lower side 311 by an extent which differs from one fin to another, and, more particularly, the said lower ends 331b, 332b, 333b, etc. define tapered development which converges from right to left, in order to receive better the flow of fluid which enters from the mouth 210 into the chamber 300, and to deflect the flow itself in a fractional manner upwards between the fins 331, 332, 333, etc. themselves.
- Again preferably, the lower end 331b of the fin furthest to the right 331 is arranged at a height which is slightly higher than the height of the mouth 210 for intake of the fluid, whereas the top wall 314 of the said chamber 300 has the shape of a dome, or a shape which tapers upwards, in order to converge the flow towards the second, outlet mouth 220, and thus to obtain venting of the air, and to avoid the formation of air bubbles inside the chamber for heating of the fluid.
- The control unit 600 is preferably contained inside a respective third body 601, in the form of a separable and replaceable body, wherein the said third body 601 is provided with first electrical connection units 602 and 603 which are connected to the control unit 600, and can be coupled to second electrical connection units 401 and 402 of the resistor 400.
- In addition, the first, base body 100 can comprise an aperture or blind hole 501 inside which it is possible to insert and/or remove the first sensor 500 which projects from the third body 601, and the second sensor 700.
- The description of the heater which is the subject of the present invention is provided purely by way of non-limiting example, and thus it is apparent that all modifications or variants can be made which however come within the scope of the following claims, which also constitute an integral part of the present description.

## Claims

1. Electric heater for heating, maintaining the temperature and permitting the circulation of a fluid, comprising:
- a first base body (**100**) and a second cover body (**200**), which are associated with one another and form an inner chamber (300);
- a first mouth (**210**) for the intake of the fluid into said inner chamber (**300**);
- a second mouth (**220**) for the discharge of the fluid from said inner chamber (**300**);
- an electric resistor (**400**);
- a first temperature sensor (**500**) and
- a control unit (**600**);
**characterised in that** said first base body (**100**) is provided with a plurality of fins **(330** / **331, 332, 333, etc.**) which extend inside the inner chamber (**300**);
- **that** said electric resistor (400) is embedded/incorporated in the mass of material which forms said first base body (100), wherein said resistor (400) heats the first base body (100);
- **that** said first base body (**100**) incorporates the first sensor (**500**) which is designed to measure the temperature of the first base body (**100**);
- that said resistor (**400**) and said first sensor (**500**) are connected to the control unit (**600**);
- **that** said control unit (**600**) controls the signals received from the first sensor (**500**), and activates the resistor (**400**) in a controlled manner in order to maintain the first base body (**100**) at a certain temperature;
- **that** said inner chamber (300) has the shape of a box comprising a lower side (311), a left vertical side (312), a right vertical side (313), an upper side (314), and a depth (H3);
- **that** the first, intake mouth (210) for the fluid is arranged in the lower area of said chamber (330) and in the vicinity of the right side of the chamber (300);
- **that** the outlet mouth (220) for the fluid is arranged on the upper side (314) of the chamber (300);
- **that** the fins (331, 332, 333, 334, etc.) are oriented vertically inside said chamber (300) and are spaced transversely from one another;
- and **that** the fins (331, 332, 333, etc.) have a longitudinal - vertical side or foot which is associated with the first, base body (100).

2. Heater according to claim 1, **characterised in that** it also comprises a second temperature sensor (700), **in that** said second sensor (700) is connected to the control unit (600), and **in that** the said control unit (600) controls the signals received from the second sensor (700) and interrupts the power supply to the resistor (400) if the base body (100) exceeds a certain safety temperature.

3. Heater according to claim 1 or 2, **characterised in that** said fins have a respective lower end (331b, 332b, 333b, etc.) arranged spaced from the lower side (311) of the inner chamber (300).

4. Heater according to claim 3, **characterised in that** the lower end (331b, 332b, 333b, etc.) of each fin (331, 332, 333, etc.) is spaced from the lower side (311) of the chamber (300) with tapered development which converges from right to left.

5. Heater according to claim 3 or 4, **characterised in that** the lower end (331b) of the fin furthest to the right (331) is arranged at a height which is slightly higher than the height of the mouth (210) for the intake of the fluid.

6. Heater according to any of claims 3 to 5, **characterised in that** when the flow of fluid enters from the intake mouth (210) into the chamber (300), the lower ends (331b, 332b, 333b, etc.) of the fins (331, 332, 333, etc.) deflect the flow in a fractional manner upwards between the fins (331, 332, 333, etc.).

7. Heater according to any one of claims 2 to 6, **characterised in that** the top wall (314) of said inner chamber (300) has the shape of a dome, and **in that** the outlet mouth (220) for the fluid is positioned in the vicinity of the apex of said dome.

8. Heater according to any one of the preceding claims, **characterised in that** said resistor (400) has a configuration in the form of a coil-snake.

9. Heater according to one of the preceding claims, **characterised in that** said control unit (600) is incorporated in a respective third, box-shaped body (601), **in that** said third body (601) is provided with first electrical connection units (602,603) which are connected to the control unit (600), **in that** said first, base body (100) is provided with second electrical connection units (401, 402) which are associated with the resistor (400); and **in that** said first electrical connection units (602, 603) can be coupled to said second electrical connection units (401, 402).

10. Heater according to one of the preceding claims, **characterised in that** the first, base body (100) comprises an aperture (501) inside which it is possible to insert and/or remove the sensor (500).

## Patentansprüche

1. Elektrisches Heizgerät zum Heizen, Aufrechterhalten der Temperatur und Ermöglichen der Zirkulation eines Fluids, umfassend:
- einen ersten Grundkörper (100) und einen zweiten Deckelkörper (200), die miteinander verbunden sind und einen Innenraum (300) bilden,
- eine erste Öffnung (210) für die Zuführung des Fluids in den Innenraum (300),
- eine zweite Öffnung (220) für den Austritt des Fluids aus dem Innenraum (300),
- einen elektrischen Widerstand (400),
- einen ersten Temperatursensor (500) und
- eine Steuereinheit (600),
**dadurch gekennzeichnet, dass**
- der erste Grundkörper (100) mit einer Mehrzahl von Rippen (330, 331, 332, 333 etc.) bestückt ist, die sich innerhalb des Innenraums (300) erstrecken,
- der elektrische Widerstand (400) in einer Materialmasse eingeschlossen ist, die den ersten Grundkörper (100) bildet, wobei der Widerstand (400) den ersten Grundkörper (100) heizt,
- der erste Grundkörper (100) den ersten Sensor (500) einschließt, der so ausgebildet ist, dass er die Temperatur des ersten Grundkörpers (100) misst,
- der Widerstand (400) und der erste Sensor (500) mit der Steuereinheit (600) verbunden sind,
- die Steuereinheit (600) die Signale auswertet, die sie von dem ersten Sensor (500) erhält, und den Widerstand (400) in gesteuerter Weise aktiviert, um den ersten Grundkörper (100) auf einer bestimmten Temperatur zu halten,
- der Innenraum (300) die Form eines Gehäuses mit einer Unterseite (311), einer linken Vertikalseite (312), einer rechten Vertikalseite (313) und einer Oberseite (314) hat und eine Tiefe (H3) aufweist,
- die erste Öffnung (210) für die Fluidzufuhr im unteren Bereich des Innenraums (300) und in der Nähe der rechten Seite des Innenraums (300) liegt,
- die Öffnung (220) für den Fluidaustritt an der Oberseite (314) des Raums (300) liegt,
- sich die Rippen (331, 332, 333, 334, etc.) in dem Innenraum (300) vertikal erstrecken und quer zueinander beabstandet sind und
- die Rippen (331, 332, 333, 334 etc.) eine vertikale Längsseite oder einen Fuß haben, der mit dem ersten Grundkörper (100) vereinigt ist.

2. Heizgerät nach Anspruch 1, **dadurch gekennzeichnet, dass** dieses einen zweiten Temperatursensor (700) aufweist, der mit der Steuereinheit (600) verbunden ist, welche die von dem zweiten Sensor (700) erhaltenen Signale auswertet und die Stromversorgung des elektrischen Widerstands (400) unterbricht, wenn der Grundkörper (100) eine bestimmte Sicherheitstemperatur überschreitet.

3. Heizgerät nach Anspruch 1 oder 2, **dadurch gekennzeichnet, dass** die Rippen jeweils ein unteres Ende (331b, 332b, 333b etc.) haben, das von der Unterseite (311) des Innenraums (300) einen Abstand aufweist.

4. Heizgerät nach Anspruch 3, **dadurch gekennzeichnet, dass** das untere Ende (331b, 332b, 333b etc.) jeder Rippe (331, 332, 333 etc.) zur Unterseite (311) des Innenraums (300) über eine konische verjüngende Form beabstandet ist, die von rechts nach links konvergiert.

5. Heizgerät nach Anspruch 3 oder 4, **dadurch gekennzeichnet, dass** das untere Ende (331b) der am weitesten nach rechts ausgerichteten Rippe (331) in einer Höhe angeordnet ist, die geringfügig höher als die Höhe der Öffnung (210) für die Fluidzuführung ist.

6. Heizgerät nach einem der Ansprüche 3 bis 5, **dadurch gekennzeichnet, dass** dann, wenn der Fluidstrom von der Zuführöffnung (210) in den Innenraum (300) eintritt, die unteren Enden (331b, 332b, 333b etc.) der Rippen (331, 332, 333 etc.) den Fluidstrom zwischen den Rippen (331, 332, 333 etc.) fraktioniert nach oben ablenken.

7. Heizgerät nach einem der Ansprüche 2 bis 6, **dadurch gekennzeichnet, dass** die Oberseite (314) des Innenraums (300) kuppelförmig ausgebildet ist und die Austrittsöffnung (220) für das Fluid in der Nähe der Scheitelhöhe der Kuppel liegt.

8. Heizgerät nach einem der vorhergehenden Ansprüche, **dadurch gekennzeichnet, dass** der Widerstand (400) die Form einer Windungsschlange hat.

9. Heizgerät nach einem der vorhergehenden Ansprüche, **dadurch gekennzeichnet, dass** die Steuereinheit (600) in einem dritten Gehäusekörper (601) untergebracht ist, der erste elektrische Anschlusseinheiten (602, 603) hat, die mit der Steuereinheit (600) verbunden sind, dass der erste Grundkörper (100) zweite elektrische Anschlusseinheiten (401, 402) hat, die mit dem elektrischen Widerstand (400) verbunden sind, und dass die ersten elektrischen Anschlusseinheiten (602, 603) mit den zweiten elektrischen Anschlusseinheiten (401, 402) kuppelbar sind.

10. Heizgerät nach einem der vorhergehenden Ansprüche, **dadurch gekennzeichnet, dass** der erste Grundkörper (100) eine Blindöffnung (501) aufweist, in die der Sensor (500) einsetzbar und/oder daraus herausnehmbar ist.

## Revendications

1. Appareil de chauffage électrique pour chauffer, maintenir la température et rendre possible la circulation d'un fluide, comprenant :
- un premier corps de base (100) et un second corps de couvercle (200) qui sont reliés l'un à l'autre pour former une chambre interne (300),
- un premier orifice (210) pour l'alimentation du fluide dans la chambre interne (300),
- un second orifice (220) pour le débit du fluide de la chambre interne (300),
- une résistance électrique (400),
- un premier détecteur de température (500),
- une unité de commande (600),
**caractérisé par le fait que**
- ledit premier corps de base (100) est muni d'une pluralité d'ailettes (330, 331, 332, 333 etc.) qui s'étendent dans la chambre interne (300),
- la résistance (400) est incorporée dans la matière formant le premier corps de base (100), ladite résistance (400) chauffant ledit premier corps de base (100),
- ledit premier corps de base (100) inclure le premier détecteur (500) apt à mesurer la température du premier corps de base (100),
- ladite résistance (40) et le premier détecteur sont reliés à l'unité de commande (600),
- ladite unité de commande (600) exploite les signaux transmis par le premier détecteur (500) pour activer par réglage la résistance (400) pour maintenir le premier corps de base (100) à une certaine température,
- la chambre interne (300) présente la forme d'une boîte comprenant une paroi inférieure (311), une paroi verticale à gauche (312), une paroi verticale à droite (313), une paroi supérieure (314) et une profondeur (H3),
- le premier orifice (210) pour l'alimentation du fluid est positionné dans la zone inférieure de la chambre (300) et à proximité de la paroi droite de la chambre (300),
- le second orifice (220) pour le débit du fluid est positionné à la paroi supérieure (314) de la chambre (300),
- les ailettes (331, 332, 333, 334 etc.) s'étendent verticalement dans ladite chambre (300) et à une distance transversale l'une de l'autre,
- les ailettes (331, 332, 333 etc.) présentent un côté longitudinal - vertical ou un pied relié au premier corps de base (100).

2. Appareil de chauffage selon la revendication 1, **caractérisé par le fait qu'**il comprend un second détecteur de température (700) relié à l'unité de commande (600) laquelle exploit les signaux transmis par le second détecteur (700) et interrompe l'alimentation en énergie électrique de la résistance (400) dans les cas que le premier corps de base (100) excède une certaine température de sûreté.

3. Appareil de chauffage selon la revendication 1 ou 2, **caractérisé par le fait que** les extrémités inférieures (331b, 332b, 333b etc.) des ailettes ont une distance à la paroi inférieure (311) de la chambre interne (300).

4. Appareil de chauffage selon la revendication 3, **caractérisé par le fait que** l'extrémité inférieure (331b, 332b, 333b etc.) de chaque ailette (331, 332, 333 etc.) a une distance à la paroi inférieure (311) convergente en forme de cône de droite à gauche.

5. Appareil de chauffage selon la revendication 3 ou 4, **caractérisé par le fait que** l'extrémité inférieure (331b) de l'ailette plus droite (331) se trouve à une hauteur sensiblement plus haute de l'hauteur de l'orifice (210) pour l'alimentation du fluide.

6. Appareil de chauffage selon une des revendications 3 à 5, **caractérisé par le fait que**, lors de l'entrée du fluide à travers l'orifice d'alimentation (210) dans la chambre (300), les extrémités inférieures (331b, 332b, 333b etc.) des ailettes (331, 332, 333 etc) déflechissent le fluide par fractions en haut entre les ailettes (331, 332, 333 etc).

7. Appareil selon une des revendications 2 à 6, **caractérisé par le fait que** la paroi supérieure (314) de la chambre interne (300) est en forme d'un dôme et que l'orifice (220) pour le débit du fluide est positionné au voisinage de l'apex dudit dôme.

8. Appareil selon une des revendications précédentes, **caractérisé par le fait que** la résistance (400) est en forme d'un serpentin à spires.

9. Appareil selon une des revendications précédentes, **caractérisé par le fait que** l'unité de commande (600) est incorporée dans un troisième corps à boîte (601) muni de premières unités de raccord éléctrique (602, 603) reliées à l'unité de commande (600), ledit premier corps de base (100) étant muni de secondes unités de raccord électriques (401, 402) associées à la resistane (400), et que les premières unités de raccord éléctrique (602, 603) sont aptes à être reliées à lesdites secondes unités de raccord éléctrique (401, 402).

10. Appareil selon une des revendications précédentes, **caractérisé par le fait que** le premier corps de base (100) présente une mortaise borgne (501) apte à la montage dudit détecteur (500).
